# EUROPEAN PATENT APPLICATION

(11) **EP 2 098 961 A1**
(43) Date of publication of application: **09.09.2009**
(21) Application number: 09153582.3
(22) Date of filing: 25.02.2009
(51) Int. Cl.: G06F 17/30

(54) **Apparatus and method for universal data access by location based systems**

(30) Priority: 06.03.2008 US 43392
(71) Applicant: Robert Bosch GmbH, 70469 Stuttgart (DE)
(72) Inventor: Faenger, Jens, Santa Clara, CA 95054 (US)
(74) Representative: Barth, Stephan Manuel

(57) **Abstract**

A method of operating a location based system includes storing first web service definitions for first location data sources in the location based system, and storing second web service definitions for second location data sources in a server communicatively coupled to the location based system via the internet. A user is prompted to select one of the location data sources. One of the web service definitions is used to access the selected location data source via the internet.

## Description

### BACKGROUND

### 1. Field of the Invention.

The present invention relates to apparatuses and methods for providing data to a location based system.

### 2. Description of the Related Art.

A typical location based system may receive location data and use the data to create a display on an electronic map or to provide route guidance information within a vehicle. Known location based systems are able to connect to only a limited number of internet data sources, such as web services, and use them to provide different location based services. But location data is offered by a great number of internet data sources that are not utilized by known location based systems. If location based systems are to connect to and take advantage of a greater number of internet data sources, the location based systems will have to extract that location data from a range of different and changing formats. Accommodating all of the differences between the various data formats on the internet can be difficult.

Some of the location data available on the internet is available in standardized XML formats (Extensible Markup Language) such as GeoRSS (Really Simple Syndication) or KML (Keyhole Markup Language). Those languages contain location information in data structures with names such as <latitude>, <geo:lat>, <georss:point>, <icbm:lat>, <icbm:latitude>, <geourl:latitude>, or <coordinates>. It is possible for location based systems to make use of this information by analyzing these specific, standardized structures.

In addition to these standardized formats there are a lot of XML based wed services and data formats available that provide location based information. An example web service is local business search. It finds restaurants and other businesses around a specific location and returns XML formatted data that incorporates location coded results. The structure of the XML formatted response is usually not standardized and is very specific to the accessed web service. Thus, location based systems have to provide specific support for each XML based web service they are to connect with.

In addition to internet access, location based information might also be retrieved from a local data storage which uses XML data. A usual way of using internet and local data sources is to provide components within the location based system that are specifically designed to process one kind of XML format. This specific design includes fixed knowledge about the place where the location information is stored within the XML format. For instance, an algorithm might be implemented that reads a document tree and looks for a tag named <position> first, followed by a tag named <latitude>. The latter is part of the sub tree of <position>. A drawback of this approach is that it is very dependent on the structure of the XML format. As soon as the structure changes, e.g., <latitude> is renamed or is not part of the element <position> anymore, the algorithm has to be redesigned. If a greater number of XML formats with different structures are to be supported by the location based system, a specific implementation for each of the different document types would no longer be feasible and a generalized approach would be needed.

Location data is also provided by XML based web services. These are dynamic, such as that the XML data received from the server changes according to the parameters used for the query. For example, if an address and a radius are sent to a restaurant search web service, the response will contain only restaurants located in that area. If the search terms change, the results will be different accordingly.

Different web services usually require a different format and syntax for their queries. For example, one web service might require a location to be specified as a geo-coordinate, whereas another requires a location to be specified as an address. Another web service might need additional information such as a search radius. For each web service supported, the location based system has to understand what search inputs are required, the order and format of the search input, and the relationship between search terms and search results.

If a web service undergoes changes, e.g., the web service provider begins to require additional search parameters or changes the format of input or output, location based systems in the field will usually become incompatible with the service. In order to continue using the updated web service, the location based system must be modified in order to be compatible with the changes in the web service.

In addition to structured XML data sources, there is also location data available on the internet in HTML format. Coordinates, addresses, or just city names might be displayed in a structured way on web pages. Being able to use HTML pages as a data source would be advantageous due to the great number of these pages that have become available. In fact, a lot of information is available only in this format. Similarly to XML, HTML data may also be static or dynamically generated in response to a query. For example, an internet search could return a list of addresses that might be used as a database for location based services.

Another format of interest is JSON, the JavaScript Object Notation. JSON is used by a range of web services to transmit data from the server to a client. It is usually used in conjunction with HTML pages to send results of dynamic queries, such as location data, to the client.

In summary, the internet may provide a great range of data that encodes locations such as addresses or geographical coordinates. What is not disclosed or suggested in the art is a location based system, such as a navigation system in car, a portable navigation system, or a cell phone, that can make use of this great range of data.

### SUMMARY

The present invention provides location based systems, such as navigation systems, with universal access to all types of location data on the internet. The invention allows for easy integration of web services and other internet based data sources into location based devices that are connected to the internet.

The invention enables all of the aforementioned data services and formats to be available for use by location based systems. The invention provides universal methods for getting access to web based location information; processing the received data; extracting location information from the data; and further processing of the extracted location data for use in location based applications.

In one aspect, the present invention includes a method of operating a location based system, including storing first web service definitions for first location data sources in the location based system, and storing second web service definitions for second location data sources in a server communicatively coupled to the location based system via the internet. A user is prompted to select one of the location data sources. One of the web service definitions is used to access the selected location data source via the internet.

In another aspect of the present invention, a method of operating a location based system includes storing web service definitions for location data sources in the location based system and/or a server communicatively coupled to the location based system via the internet. A user is prompted to select one of the location data sources. One of the web service definitions is used to access the selected location data source via the internet. A format of location data accessed from the selected location data source is determined. If the determined format is not a desired format, the location data is converted into the desired format.

In still another aspect, the present invention provides a method of operating a location based system includes storing web service definitions for location data sources in the location based system and/or a server communicatively coupled to the location based system via the internet. A corresponding format of each of a plurality of sets of location data accessible from the location data sources is determined. Each of the corresponding formats is different than other ones of the corresponding formats. Each of the sets of location data is accessed. The accessing includes specifying a respective lookup path to each of the sets of location data. Each of the sets of location data is transformed into a unified format. Each of the specifying and transforming steps is dependent upon each of the formats corresponding to the sets of location data.

An advantage of the present invention is that it removes the limitation on location based systems of being able to support only a small number of web services due to the need for a having a separate proprietary interface for each of the web services.

Another advantage is that the present invention is that it solves the problem of web services changing, thus becoming incompatible with an existing navigation system.

Yet another advantage is that the present invention provides easy integration of web services without requiring structural changes to the system.

A further advantage is that HTML and JSON are supported as data sources, and thus no negotiations with a service provider for a costly syndicated XML interface are necessary.

A still further advantage is that the invention allows for accessing and extracting location information from any web service that provides data in structured formats such as JSON, KML, GeoRSS and any other kind of XML format that contains location information.

Another advantage is that HTML can be used as a data source format for location information, potentially opening up millions of web pages as the data source for location-based services.

Yet another advantage is that all data sources and formats can be used dynamically, i.e., they can be added to the system, removed or changed without requiring structural changes to the location based system.

### BRIEF DESCRIPTION OF THE DRAWINGS

The above mentioned and other features and objects of this invention, and the manner of attaining them, will become more apparent and the invention itself will be better understood by reference to the following description of an embodiment of the invention taken in conjunction with the accompanying drawings, wherein:

FIG. 1 is a flow diagram of web service definitions to one embodiment of a location based system of the present invention;

FIG. 2 illustrates a step in the flow diagram of FIG. 1 in which the data source is specified using an internet address with templates;

FIG. 3 illustrates another step in the flow diagram of FIG. 1 in which foreign data formats are transformed into XML;

FIG. 4 illustrates yet another step in the flow diagram of FIG. 1 in which, using a web service definition, data is dynamically extracted from the web service response and displayed on the screen;

FIG. 5 is a flow chart of one embodiment of a method of the present invention for operating a location based system;

FIG. 6 is a flow chart of another embodiment of a method of the present invention for operating a location based system; and

FIG. 7 is a flow chart of yet another embodiment of a method of the present invention for operating a location based system.

Corresponding reference characters indicate corresponding parts throughout the several views. Although the drawings represent embodiments of the present invention, the drawings are not necessarily to scale and certain features may be exaggerated in order to better illustrate and explain the present invention. Although the exemplification set out herein illustrates embodiments of the invention, in several forms, the embodiments disclosed below are not intended to be exhaustive or to be construed as limiting the scope of the invention to the precise forms disclosed.

### DETAILED DESCRIPTION

The embodiments hereinafter disclosed are not intended to be exhaustive or limit the invention to the precise forms disclosed in the following description. Rather the embodiments are chosen and described so that others skilled in the art may utilize its teachings.

According to the invention, the location based system first learns how to get access to web based location information in a generalized way. For this purpose, the invention uses a web service definition for each of the data sources it wants to be able to access. A web service definition is a structured date setthat is read and processed by the location based system. The location based system can either store those definitions locally or access them from a web server.

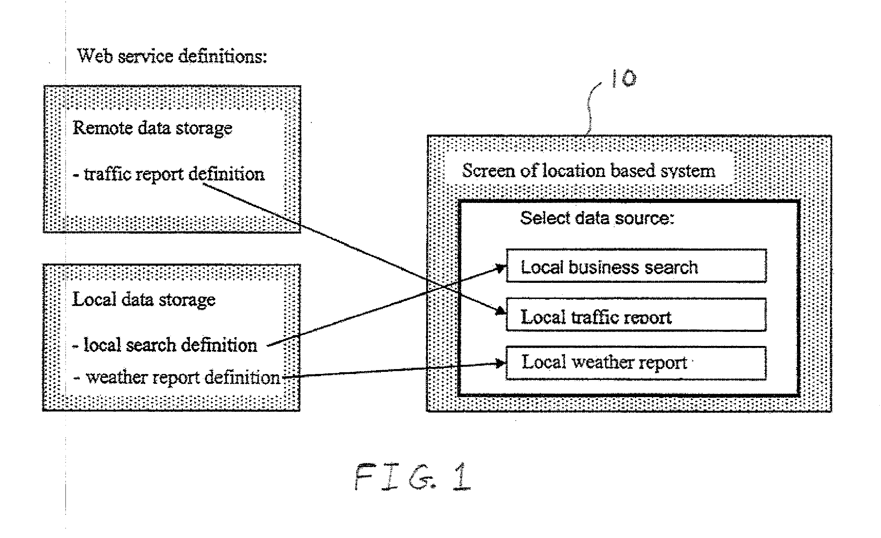

The location based system is able to automatically create a user interface to present a selection of currently available web service definitions to the user, thus allowing the user to choose which of the web services to use as the data source for location information. Such a user interface may be in the form of a screen 10 (FIG. 1). In specific embodiments, screen 10 may be a touch screen or may be accompanied by a keyboard, either of which would enable the user to choose the data source for location information. If web service definitions are added to or removed from the location based system, the list is updated accordingly. In addition, web service definitions can be modified, with or without user intervention, in case the web service described by the definition undergoes changes.

As illustrated in FIG. 1, web service definitions for data sources can either be stored locally in the location based system or read from a server. The location based system is able to dynamically collect all available data sources from both storages and display them on the screen, allowing the user to select which one to use for a query.

Each web service definition may contain the internet address (URL) of either a file or a dynamic web service on the internet. Local files can be specified in the web service definition as well. The internet address may include template parameters, for example in a format introduced by OpenSearch (see www.opensearch.org). Template parameters are variables that define the query being sent to the web service. Template parameters may include, for example, the current location, a search term entered by the user, or the maximum number of results that the user wants to see.

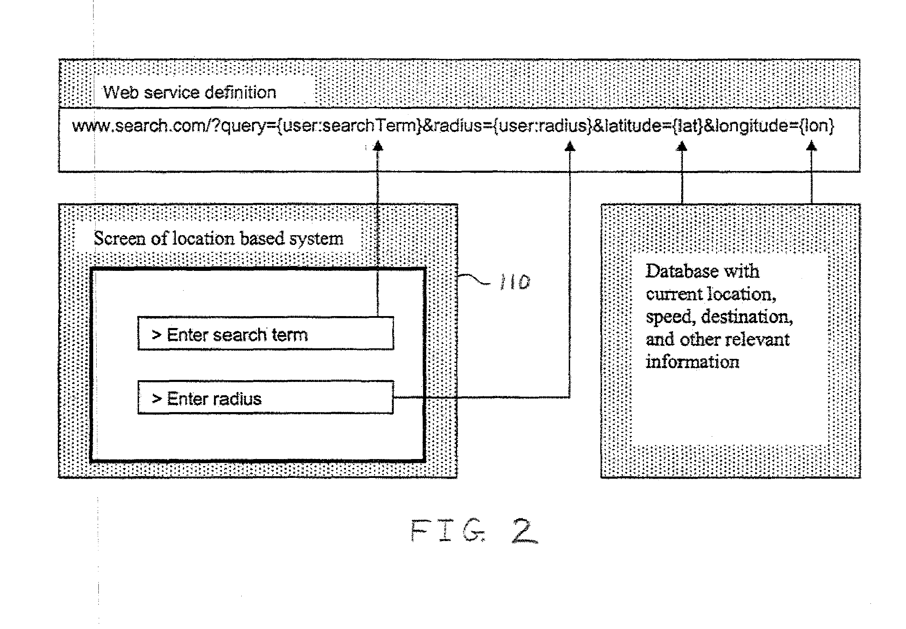

These template parameters may be later on replaced by input from the user, for example, the current search term. Alternatively, the template parameters may be filled in automatically by the location based system. For example, the template parameters may be filled in automatically with location coordinates acquired from the global positioning system (GPS) receiver of the device. Each template parameter definition may contain a flag specifying whether the user or the location based system has to provide the input. Based on this flag, a user interface which asks the user to input all necessary information can be automatically created, as shown in the form of screen 110 in FIG. 2. This interface can be graphical, a voice based system, or a combination of both.

In the embodiment of FIG. 2, the data source is specified using an internet address with templates. The graphical user interface with input fields may be generated automatically from the templates, prompting the user to fill in all the necessary data, such as the search term, e.g., "restaurants," and the radius from the vehicle. The location information may be provided automatically by the location based system.

There are different standards of communicating with web services. For example, query parameters can be sent from the location based system to the server by encoding them into the URL, as shown in FIG. 2. Alternatively, web services may require that all request parameters be sent in a more structured form such as XML. The former uses the GET command of the Hypertext Transfer Protocol (HTTP), and the latter uses the POST command. The location based system may determine the standard and formatting to be used for a specific web service by using the web service definition file, in a format such as suggested by Web Services Description Language (WSDL) (see www.w3.org/TR/wsdl20/).

Each web service may respond to the request from the user with location data that is encoded in a format that is specific to the web service. Depending on the web service, the result may be an XML file in a standardized format such as GeoRSS or KML. The web service may use an XML language that is specific to the web service. The web service may use JSON which has a syntax that is different from the syntax of XML. Alternatively, the web service may use HTML, which usually lacks structure that is needed for the automatic extraction of data.

The location based system processes the data received in the response from the web service. Using the web service definition, the location based system may determine what data format the response will use. According to the definition, the location based system may automatically transform the response data into an appropriate intermediate format. To simplify the next steps of data processing, one embodiment of a method of the invention includes transforming all different formats into a common syntax, such as XML.

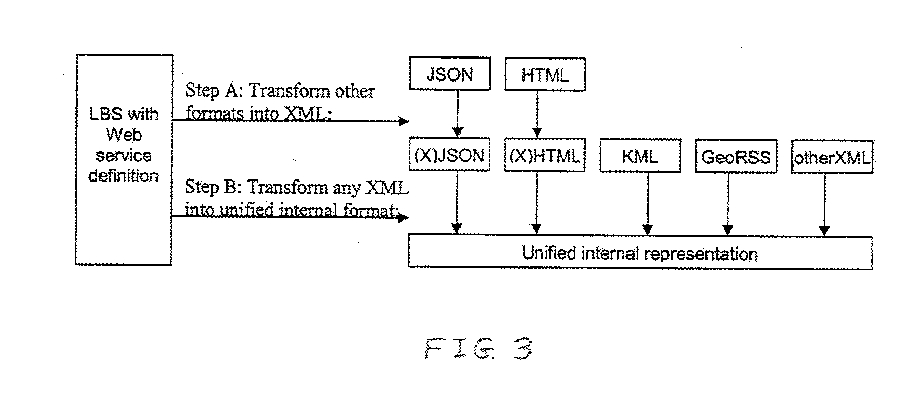

FIG. 3 illustrates how foreign data formats are transformed into XML according to one embodiment of the invention. If the received data is already in an XML format, it will not be transformed, even though different XML formats have different structures. Only data that is in a format that is different from XML will be converted into XML, as shown in FIG. 3, Step A. In case of HTML documents, a conversion into XML is possible by performing a document transformation into the XHTML format. If the data is in the JSON format, it also can be converted into an XML document. Due to the structure of JSON, a direct transformation from JSON names and value pairs into XML tags and elements may be performed.

After converting different data formats into appropriate XML formats, the location information needs to be extracted from the XML document. Although all the data is now represented in XML, the location information is still expressed very differently in the various XML formats. For example, the name of the XML tag that contains the latitude component of a location might be <latitude> or <lat>, and it might be part of a tag called <result> or <location>. In order to access the location information, either a lookup path to the location data may be specified, or all the different XML formats may be transformed into a unified format that is understood by the location based system.

The first approach of specifying a lookup path to the location data uses a named path to specify where the location data resides within the document structure. In the example above, path names such as "/result/latitude" or "/result/location/geo" can be used. More complex paths are possible when using a syntax that is compatible with XML Path Language (XPath) (see www.w3.org/TR/xpath). The location based system may use such path description within the web service definition to determine how to access the location information.

If the location data is residing in XML documents with different format structures, and the location data itself does not match the format expected by the location based system, then the second approach of transforming all the different XML formats into a unified format that is understood by the location based system may be needed. For example, latitude and longitude components of locations can be expressed using the representation [degree minute second] or the representation [degree.decimal_degree]. In such cases, a complete transformation of data structure and format is used by the location based system (see FIG. 3, Step B). The location based system may use a transformation language such as the standardized Extensible Stylesheet Language Transformations (XSLT) (see www.w3.org/TR/xslt) for this purpose. Using a transformation language makes it possible to make complex changes to the data and its structure. Using a transformation language also allows for reformatting the data, performing calculations on the data, and combining or splitting data elements.

In addition to the functionality provided by standard languages such as XSLT, the transformation language of the location based system also supports processing of location data. The transformation language of the location based system allows for coordinate transformations such as address-to-coordinate, coordinate-to-address, change of coordinate system, and extraction of locations from unstructured text. Extraction of locations from unstructured text makes it possible to extract addresses and locations even if they are embedded in larger amounts of text. Extraction of locations from unstructured text relies on finding patterns typical for addresses and locations within the unstructured text. This functionality is beneficial for data originating from HTML or text documents.

The extracted location data may be further processed for use in location based applications. After specifying the lookup path or applying the transformation, the data resides in a format that is well understood by the location based system. At this point, it is possible to use the data in a location based application such as a navigation system. Usually the data received from web services consists of more than just the location information. For example, additional information may include the location's name, its address, a further description, a phone number, and/or a rating or evaluation of the location. In addition, there may be a great range of other information provided that is specific to each web service. All this data might be of interest for the location based application as well as to the user. The location based system is able to process this additional data to create a graphical or voice-based user interface, hence displaying the relevant information on the screen or creating an appropriate audio representation. For the purpose of creating the user interface, the location based system uses the web service definition. The web service definition specifies which of the data elements are to be used in the user interface. The elements to be used are identified by a lookup path, similar to paths used for extraction of the location data.

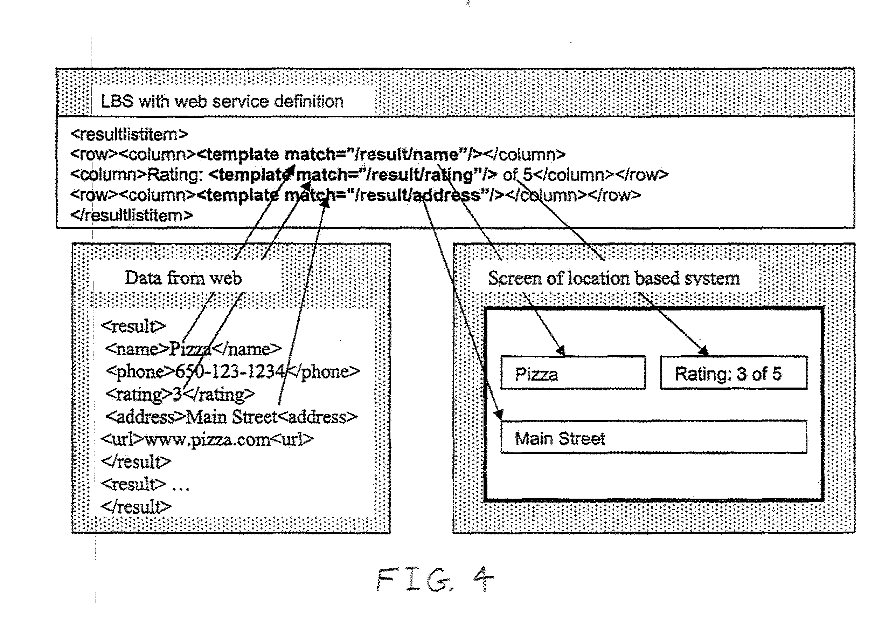

In addition, the web service definition also specifies how this data is to be formatted when presented to the user. For data formatting and presentation, the location based system uses an interface description language such as HTML or Extensible HyperText Markup Language (XHTML) (see www.w3.org/TR/htm1). The interface description language may allow for dynamic replacement of template parameters with data. For example, in order to create a list of restaurant locations, each item showing name, address and rating of the location, the web service definition uses three template parameters in the user interface specification. These template parameters are the lookup paths to the data elements. In order for the location based system to display the data on the screen, the location based system uses the lookup paths in the templates and dynamically replaces them with the actual data received from the web service, as illustrated in FIG. 4. Thus, by using the web service definition, data is dynamically extracted from the web service response and displayed on the screen.

As described above, a novel aspect of the present invention is a location based system that can use location data from many web services in different data formats, wherein no specific algorithm is required to make use of the different web services. The invention may easily accommodate changes in data sources or web services, and may easily integrate new web services. The present invention enables any kind of XML content to be used for location based services. The invention further enables HTML and/or JSON to be used as a data source for location based services. No dedicated server or infrastructure is needed for data conversion, as all data processing may be handled by the client computer. Users can specify their own data sources in addition to preconfigured data sources, thereby virtually allowing for a location based device that has nearly unlimited sources of location information. The invention may be used in any system that makes use of location information, for example, navigation and other mobile systems.

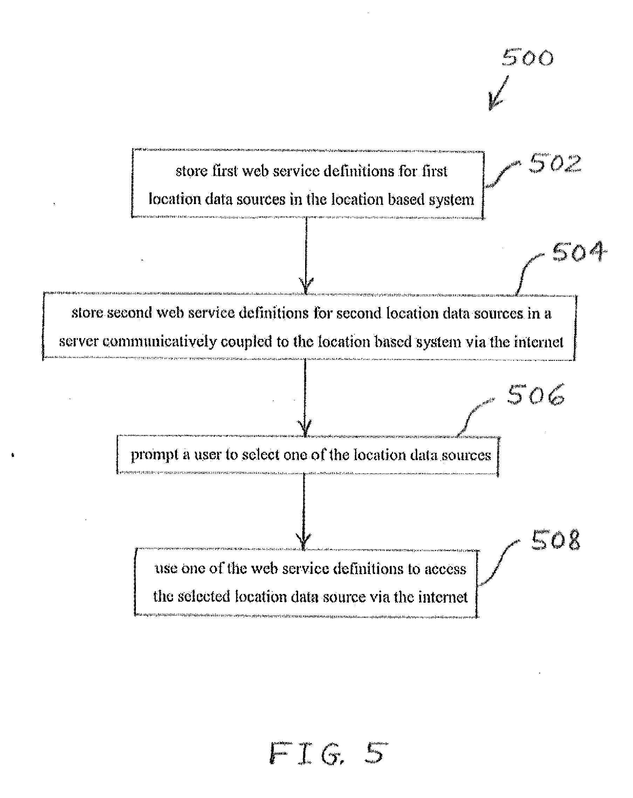

One embodiment of a method 500 of the present invention for operating a location based system is illustrated in FIG. 5. In a first step 502, first web service definitions for first location data sources are stored in the location based system. For example, as shown in FIG. 1, a local search definition and a weather report definition are stored in local data storage of the location based system.

Next, in step 504, second web service definitions for second location data sources are stored in a server communicatively coupled to the location based system via the internet. For example, as shown in FIG. 1, a traffic report definition is stored in remote data storage of a server that may be in communication with the location based system via the internet.

In a next step 506, a user is prompted to select one of the location data sources. That is, as also shown in FIG. 1, screen 10 may present data source choices to a user, including a local business search, a local traffic report, and a local weather report.

In a final step 508, one of the web service definitions is used to access the selected location data source via the internet. As best shown in FIG. 2, a particular web service definition may include a web address in the form of a lookup path that is used to access a selected location data source.

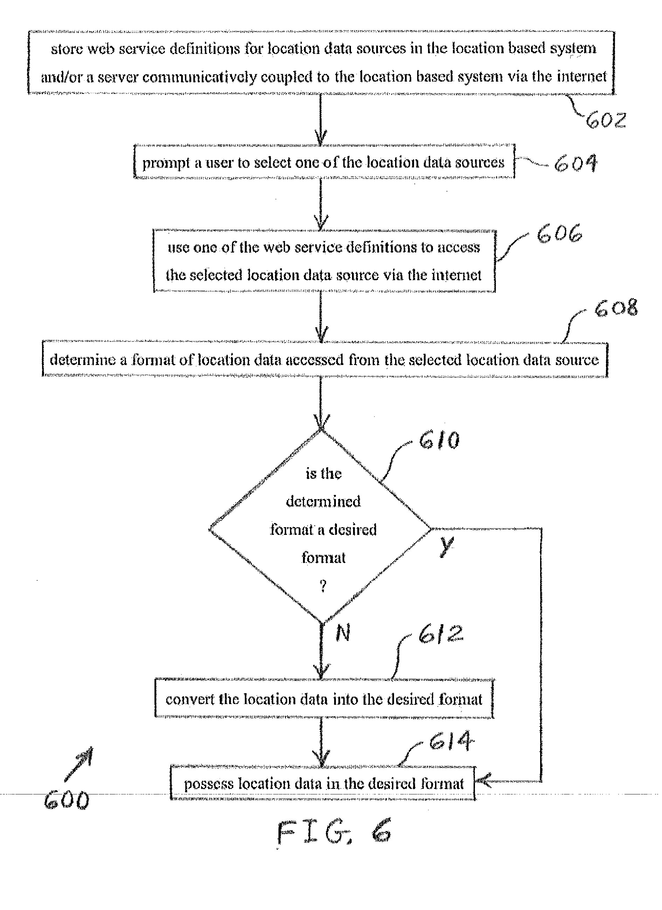

Another embodiment of a method 600 of the present invention for operating a location based system is illustrated in FIG. 6. In a first step 602, web service definitions for location data sources are stored in the location based system and/or in a server communicatively coupled to the location based system via the internet. For example, as shown in FIG. 1, a local search definition and a weather report definition are stored in local data storage of the location based system. As also shown in FIG. 1, a traffic report definition is stored in remote data storage of a server that may be in communication with the location based system via the internet.

In a next step 604, a user is prompted to select one of the location data sources. For example, as illustrated in FIG. 1, screen 10 may present data source choices to a user, including a local business search, a local traffic report, and a local weather report.

Next, in step 606 one of the web service definitions is used to access the selected location data source via the internet. As best shown in FIG. 2, a particular web service definition may include a web address in the form of a lookup path that is used to access a selected location data source.

A format of location data accessed from the selected location data source is determined in step 608. For example, using the web service definition, the location based system may determine what data format the location data response will be in.

If in step 610 it is decided that the determined format of the location data is not a desired format, then the location data is converted into the desired format in step 612 and the location data remains in the desired format in step 614.

However, if in step 610 it is decided that the determined format of the location data is a desired format, then operation proceeds to step 614 whereat the location data remains in the desired format.

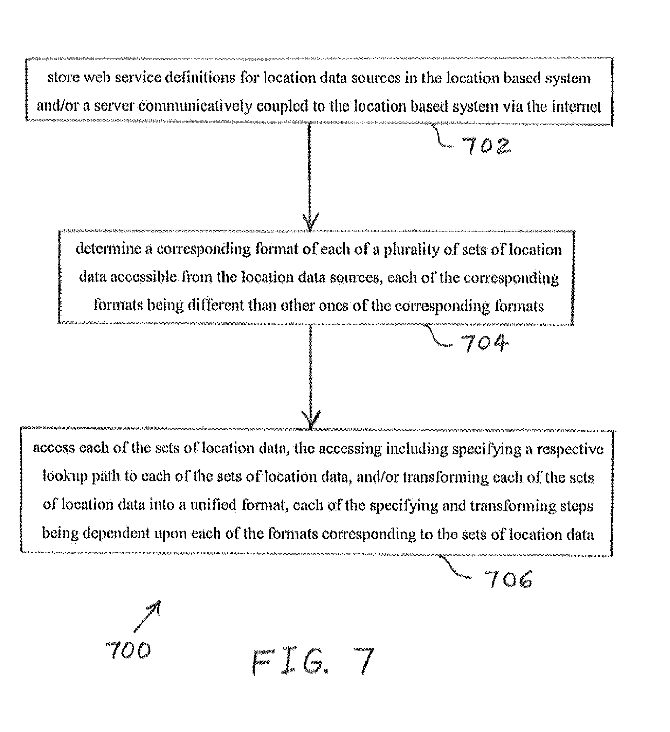

Yet another embodiment of a method 700 of the present invention for operating a location based system is illustrated in FIG. 7. In a first step 702, web service definitions for location data sources are stored in the location based system and/or in a server communicatively coupled to the location based system via the internet. For example, as shown in FIG. 1, a local search definition and a weather report definition are stored in local data storage of the location based system. As also shown in FIG. 1, a traffic report definition is stored in remote data storage of a server that may be in communication with the location based system via the internet.

In a next step 704, a corresponding format of each of a plurality of sets of location data accessible from the location data sources is determined. Each of the corresponding formats is different than other ones of the corresponding formats. For example, using the web service definition, the location based system may determine what data format the location data response will be in. Each of the sets of location data may have a different format, such as JSON, HTML, KML, GeoRSS, or other XML, for example.

In a final step 706, each of the sets of location data are accessed. The accessing includes specifying a respective lookup path to each of the sets of location data, and/or transforming each of the sets of location data into a unified format. Each of the specifying and transforming steps is dependent upon each of the formats corresponding to the sets of location data. As illustrated in FIG. 2, a lookup path may be specified for accessing a particular set of location data, depending upon the format of the location data. Each of the sets of location data may have a respective lookup path. Additionally, or alternatively, the accessing may include transforming each set of location data into a unified format, as illustrated in FIG. 3, which may also be dependent upon the format of the location data.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A method of operating a location based system, comprising the steps of:
storing web service definitions for location data sources in at least one of the location based system and a server communicatively coupled to the location based system via the internet;
prompting a user to select one of the location data sources; and
using one of the web service definitions to access the selected location data source via the internet.

2. The method of claim 1 wherein the storing step comprises:
storing first web service definitions for first location data sources in the location based system; and
storing second web service definitions for second location data sources in a server communicatively coupled to the location based system via the internet.

3. The method of claim 2 wherein the web service definition specifies an internet address of the selected location data source.

4. The method of claim 3 wherein the internet address comprises a lookup path.

5. The method of claim 3 wherein the selected location data source comprises one of a file and a dynamic web service on the internet.

6. The method of claim 2 wherein the prompting step comprises prompting a user via a user interface to select one of the location data sources, the method comprising the further step of the user manually selecting via the user interface the one of the location data sources.

7. The method of claim 2 comprising the further steps of:
determining a format of location data accessed from the selected location data source; and
if the determined format is not an XML format, converting the location data into an XML format.

8. The method of claim 7 comprising the further step of transforming the location data from the XML format to a unified format.

9. The method of claim 7 wherein the determining step includes using the one web service definition.

10. The method of claim 7 comprising the further step of transforming the location data from the XML format to a unified format.

11. The method of claim 7 wherein the determining step includes determining a corresponding format of each of a plurality of sets of location data accessible from the location data sources, each of the corresponding formats being different than other ones of the corresponding formats, the method comprising the further step of accessing each of the sets of location data, the accessing including at least one of:
specifying a respective lookup path to each of the sets of location data; and
transforming each of the sets of location data into a unified format, each of the specifying and transforming steps being dependent upon each of the formats corresponding to the sets of location data.

12. The method of claim 11 comprising the further step of prompting a user to select one of the location data sources.

13. The method of claim 11 wherein the accessing step includes using the web service definitions.

14. The method of claim 11 wherein the web service definitions specify a respective internet address for each of the sets of location data.

15. The method of claim 11 comprising the further step of converting location data in one of JSON format and HTML format into an XML format, the transforming step including transforming the location data in XML format into the unified format.
